# EUROPÄISCHE PATENTSCHRIFT

(11) **EP 0 629 171 B1**
(45) Veröffentlichungstag und Bekanntmachung des Hinweises auf die Patenterteilung: **29.04.1998**
(21) Anmeldenummer: 94913435.7
(22) Anmeldetag: 08.10.1993
(51) Int. Cl.: B65G 45/16

(54) **ABSTREIFELEMENT ZUM ANORDNEN AN EINEM SYSTEMTRÄGER EINER ABSTREIFVORRICHTUNG**
STRIPPER ELEMEMT MOUNTED ON A SYSTEM BEARING OF A STRIPPING DEVICE
ELEMENT DE RACLAGE A MONTER SUR UN SUPPORT DE SYSTEME D'UN DISPOSITIF DE RACLAGE

(30) Priorität: 13.10.1992 DE 9213788 U; 15.06.1993 DE 9308826 U
(43) Veröffentlichungstag der Anmeldung: 21.12.1994
(73) Patentinhaber: Schwarze, Hans-Otto, D-45665 Recklinghausen (DE)
(72) Erfinder: Schwarze, Hans-Otto, D-45665 Recklinghausen (DE)
(74) Vertreter: Gille, Christian, Dipl.-Ing.
(86) Internationale Anmeldenummer: EP9302764
(87) Internationale Veröffentlichungsnummer: WO9408877

(56) Entgegenhaltungen:
- EP-A- 0 254 977
- US-A- 4 359 150
- US-A- 4 533 035

## Beschreibung

Die Erfindung betriff eine Abstreifvorrichtung für das Abwurfende eines Förderbandes, welche die Merkmale des Oberbegriffes des Patentanspruches 1 aufweist.

Aus der EP 0 254 977 B1 is eine derartige Abstreifvorrichtung für den Rücklaufbereich von Förderbändern bekannt, die einen sich quer zur Laufrichtung des Förderbands erstreckenden Systemträger und mehrere, jeweils an Füßen gehaltene Abstreifelemente aufweist. Die Abstreifelemente sind nebeneinander an dem Systemträger befestigt und tragen jeweils eine schälend zur Laufrichtung des Förderbands angestellte Abstreiflamelle. Die Abstreiflamellen sind durch eine Torsionsfeder drehgelenkig um eine Achse quer zur Laufrichtung des Förderbandes sowie federnd für eine elastische Ausweichbewegung um diese Achse gelagert, um fest am Förderband haftenden Hindernissen ausweichen zu können.

Jedes Abstreifelement weist zum Einstellen und Anlegen der Abstreiflamelle an den zugeordneten Bandbereich eine Höhenverstelleinrichtung und zur vorzugsweise selbsttätigen Einstellung der Parallelität der Abstreiflamelle zu dem Föderband ein Drehlager zum Verschwenken um eine Achse auf, die mit dem auf die Abstreiflamelle zulaufenden Föderbandabschnitt einen Winkel bildet, der kleiner als 90° ist.

Diese bekannten Abstreifelemente weisen zwar eine hohe Abstreifleistung auf, weil sie auch auf geringfügige Veränderungen am Föderband rasch reagieren und auch gut einstellbar sind und dabei eine zum Abstreifen von an dem Föderband anhaftenden Verunreinigungen optimale Lage automatisch einnehmen können, sind jedoch verhältnismäßig raumaufwendig ausgeführt und verhältnismäßig umständlich ein- und auszubauen.

Der Erfindung liegt die Aufgabe zugrunde, eine Abstreifvorrichtung der eingangs genannten Art derart weiterzubilden, daß die Abstreifelemente bei kompakter Bauweise einfach höhenverstellbar und leicht zu montieren und zu demontieren sind.

Diese Aufgabe wird mit einer Abstreifvorrichtung der eingangs genannten Art gelöst, welche die Merkmale des Anspruches 1 aufweist. Vorteilhafte ausgestaltungen der Erfindung sind Gegenstand der Unteransprüche.

Durch die Erfindung wird eine kompakte Einheit geschaffen, in der auf einfache und raumsparende Weise sowohl eine Höhenverstellung als auch ein automatisches Verschwenken der Abstreiflamelle möglich ist. Das Drehlager und die Höhenstelleinrichtung können konstruktiv zusammengefaßt werden. Weiterhin ist dise Einheit leicht montierbar und somit auch bei einem Defekt leicht austauschbar, wodurch eine hohe Wartungsfreundlichkeit gewährleistet ist.

Gemäß einer weiteren Ausführungsform der Erfindung besteht das Drehlager aus einer mit dem Systemträger verbundenen, in einer Rohrhülse verdrehfest angeordneten Lagerbuchse und einem mit der Lamellenstütze und der Abstreiflamelle verbundenen, in der Lagerbuchse verschwenkbar gelagerten Lagerzapfen. Dies ermöglicht nicht nur eine rationelle Fertigung sondern auch eine gute Übertragung der im Betrieb wirksamen Kräfte bei einer raumsparenden Ausbildung.

Zweckmäßig ist es insbesondere, wenn die Höhenverstelleinrichtung zur Verstellung der Höhe des Lagerzapfens gegenüber der Lagerbuchse ausgebildet ist und vorzugsweise eine Sicherungsschraube an der der Lamellenstütze abgewandten Seite zur axialen Längsfixierung der Lagerbuchse in der Rohrhülse in die Lagerbuchse einschraubbar ist. Die Befestigung des Abstreifelements bzw. seiner Lamellenstütze in der Rohrhülse wird durch eine einzige Sicherungsschraube bewirkt, die in der eingebauten betriebsmäßigen Lage innerhalb der Rohrhülse liegen kann, von der unteren Seite zugänglich ist und insbesondere mit einem einzigen Schlüssel bedient werden kann. Insofern ist das Ein- und Ausbauen des Abstreifelements besonders vereinfacht.

Grundsätzlich wird die Höhenverstellung über die Lage des Systemträgers vorgenommen. Für die individuelle Einstellung der Abstreifelemente ist die eingangs erwähnte Höhenverstelleinrichtung vorgesehen. Diese Einrichtung zur Höhenverstellung schließt gemäß einer Ausführungsform der Erfindung eine durch die oder in der Sicherungsschraube zugängliche Stellschraube ein, deren Feststellung außerhalb der Verstellung durch Reibschluß erfolgt. So kann die Höhenverstellung wiederum mit nur einem einzigen Werkzeug durch einfaches Verdrehen der Stellschraube in der einen oder anderen Richtung vorgenommen werden. Die Stellschraube liegt geschützt an der Unterseite der Rohrhülse, so daß sie weder durch abgeschältes Gut noch durch Regen oder dergleichen beeinträchtigt werden kann. Gegebenenfalls kann einfach eine Schutzkappe aufgesetzt werden.

Es ist besonders vorteilhaft, die Lagerbuchse aus Kunststoff zu fertigen, wobei zu beachten ist, daß die den Fuß aufnehmende Rohrhülse und der Lagerzapfen in der Regel aus Stahl bestehen. Damit wird ein direkter Kontakt der zueinander bewegten Stahlteile miteinander verhindert, so daß es auch nicht zu Festrostungen kommen kann. Bei geschickter Wahl des Kunststoffs ist auf diese Weise eine gewisse gute Gleiteigenschaft vorhanden, so daß auch unabhängig von möglichen Gleit- und Schmiermitteln eine gute Verschwenkbarkeit des Lagerzapfens innerhalb der Lagerbuchse gewährleistet ist. Diese Schwenkbarkeit des Abstreifelements um die zweite mit der Mittelachse der Rohrhülse zusammenfallenden Achse ist für die insbesondere selbsttätige Paralleleinstellung der Kante der Abstreiflamelle zu der Förderbandoberfläche wichtig. Bedingung dafür ist, daß die Schwenkachse zur Ebene des Förderbands einen Winkel einnimmt, der kleiner als 90° ist.

Eine kompakte Ausbildung des Abstreifelements und eine flachbauende Anordnung, die weitere Vorteile mit sich bringt, wird dadurch erreicht, daß sich der Fuß des Abstreifelements in seiner Einbaulage in der Abstreifvorrichtung im wesentlichen parallel zur Förderbandlaufrichtung erstreckt und das Torsionsfedergelenk mit einem Federende am freien Ende des Fußes befestigt ist und am anderen Federende das Drehlager mit der Lamellenstütze angebracht ist.

Zweckmäßig ist es auch, wenn das Drehlager in der Einbaulage seitlich versetzt zur Mittelachse des Fußes am Torsionsfedergelenk angeordnet ist, wodurch sich eine kompaktere Bauweise ergibt.

Gemäß einer weiteren Ausführungsform der Erfindung ist der Fuß durch ein sich in Achsrichtung der Halterung erstrekkendes Befestigungsmittel, beispielsweise eine Schraube, in der Halterung gesichert. Diese Ausgestaltung ermöglicht ein schnelles und einfaches Auswechseln der Abstreifelemente.

Alternativ zu der Ausbildung der Lagerung der Lamellenstütze und/oder des Abstreifelements mit dauernd selbsttätig frei einstellbarer Abstreifkante der Abstreiflamelle ist vorgesehen, daß die Lamellenstütze im Drehlager in vorbestimmten Schwenkpositionen feststellbar ist. Wenn sich also eine Schwenkposition eingestellt hat, kann diese durch ein Sperrmittel einfach fixiert werden.

Das Drehlager weist vorzugsweise eine das Lagergehäuse bildende Rohrhülse, eine in der Rohrhülse längs der ersten Achse verschiebbare und verstellbare Zwischenhülse aus Metall sowie eine die Drehlagerfläche bildende Lagerbuchse, vorzugsweise aus Kunststoff, auf, in der der die Lamellenstütze tragende Lagerzapfen drehbar gelagert ist. Mittels einer Schraube in der Rohrhülse, die in eine Nut in der Zwischenhülse greift, läßt sich der Lagerzapfen in der Höhe leicht verstellen, Diese Anordnung gewährleistet neben einer leichten Röheneinstellbarkeit einerseits eine frei drehbare Lagerung des Lagerzapfens und der Lamellenstütze ohne Notwendigkeit der Wartung bei einer hohen Lebensdauer, und andererseits läßt sich die Lamellenstütze mit dem Lagerzapfen, den Lagerbuchsen und der Zwischenhülse bei Bedarf als Ganzes aus der Außenhülse des Drehlagers leicht herausziehen.

Das erfindungsgemäße Abstreifelement ist also eine leicht handhabbare Einheit, die, in einfacher Weise abgepackt, gehandelt und ausgetauscht werden kann. Insbesondere der Einbau und der Ausbau am Systemträger der Abstreifvorrichtung sowie die Höhenverstellung sind besonders einfach zu bewirken. Wegen der Einzelheiten bevorzugter Konstruktionen wird auf Unteransprüche verwiesen.

Weitere Vorteile und Merkmale der Erfindung ergeben sich aus der folgenden Beschreibung mehrerer Ausführungsformen im Zusammenhang mit der Zeichnung. Es zeigen:
- Fig. 1: eine Vorderansicht eines Teils einer Abstreifvorrichtung mit einem Abstreifelement in montiertem Zustand gemäß einer ersten Ausfübrungsform der Erfindung;
- Fig. 2: eine Seitenansicht der Abstreifvorrichtung von Fig. 1;
- Fig. 3: eine Seitenansicht eines Systemträgers der Abstreifvorrichtung von Fig. 1 und Fig. 2 mit einem im Schnitt dargestellten Abstreifelement und einem weiteren Abstreifelement;
- Fig. 4: eine Schnittansicht durch das Abstreifelement entlang der Linie IV-IV von Fig. 3;
- Fig. 5: eine Vorderansicht einer Abstreifvorrichtung mit vier Abstreifelementen gemäß einer zweiten Ausführungsform der Erfindung;
- Fig. 6: eine Draufsicht auf die Abstreifvorrichtung von Fig 5;
- Fig. 7: eine Seitenschnittansicht durch eine Rohrhülse und einen Fuß eines der Abstreifelemente sowie durch den Systemträger der Abstreifvorrichtung von Fig. 5 und Fig. 6;
- Fig. 8: eine Seitenschnittansicht durch eine Rohrhülse und einen Fuß eines Abstreifelements in einer Abstreifvorrichtung gemäß einer dritten Ausführungsform der Erfindung; und
- Fig. 9: eine Seitenschnittansicht durch eine Rohrhülse und einen Fuß eines Abstreifelements in einer Abstreifvorrichtung gemäß einer vierten Ausführungsform der Erfindung.

Die in der Zeichung dargestellten Ausführungsformen einer Abstreifvorrichtung 1 nach der Erfindung dienen zum Abstreifen von in einer Richtung G gezogenen Förderbändern 2. Deshalb ist die Abstreifvorrichtung 1 unterhalb des Förderbandes 2 angeordnet. Die Abtreifvorrichtung 1 ist mit einem sich quer zum Förderband 2 erstreckenden Systemträger 3 versehen, auf dem nebeneinander sowie in Richtung des Förderbandes 2 versetzt mehrere Abstreifelemente 4 angeordnet sind. Der Systemträger 3 der Abstreifvorrichtung 1 weist zur Aufnahme der Abstreifelemente 4 mehrere Rohrhülsen 5 bzw. Halterungen 33 auf.

Das Abstreifelement 4 besteht grundsätzlich aus einem Fuß 6, einem mit dem Fuß 6 verbundenen Torsionsfedergelenk 7 direkt oder indirekt und einer an ihrem oberen Ende eine Abstreiflamelle 8 tragenden Lamellenstütze 9, die mit dem Torsionsfedergelenk 7 verbunden ist.

Die Abstreiflamellen 8 reinigen die Förderbandoberfläche, in dem sie jeweils schälend an dieser anliegen. Dabei passen sie sich den Unebenheiten des Förderbandes 2 an, so daß ein Lauf auf einer Ecke einer Abstreiflamelle 8 vermieden wird. Die Ausgleichsbewegung geschieht durch Verschwenken der Lamellenstütze 9 bzw. des Abstreifelements 4 in einem Drehlager um eine Achse A. Durch das Drehlager wird also die insbesondere selbsttätige Einstellung der Parallelität der Abstreifkante der Abstreiflamelle 8 gegenüber dem betroffenen Bereich der Förderbandoberfläche gewährleistet. Entlang der Achse A ist die Abstreiflamelle 8 durch eine Höhenverstelleinrichtung auch höhenverstellbar. Die Achse A bildet dabei mit dem auf die Abstreiflamelle 8 zulaufenden Abschnitt des Förderbandes 2 einen Winkel, der kleiner als 90° ist.

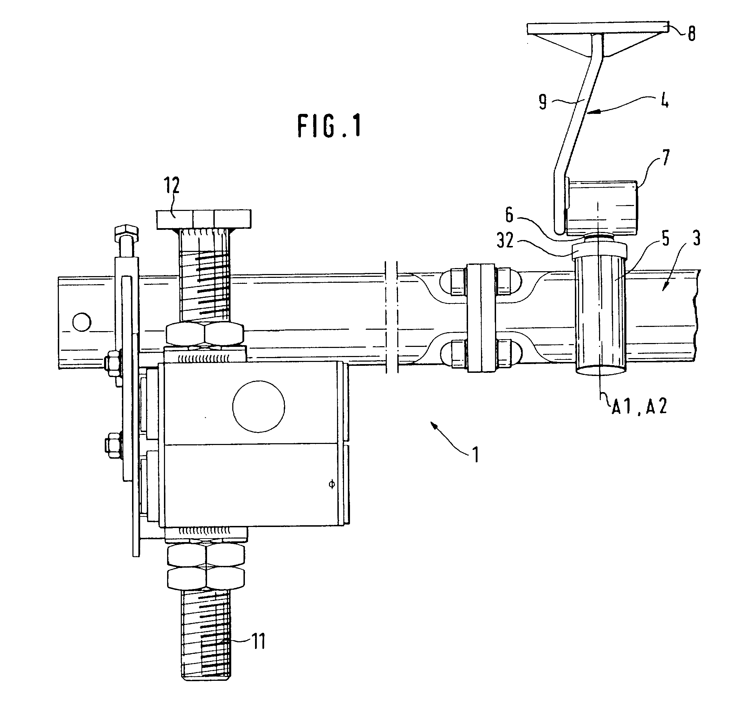

In den Figuren 1 bis 4 ist eine erste Ausfuhrungsform des Abstreifelements 4 in der Abstreifvorrichtung 1 gezeigt. Die Abstreifelemente 4 sind quer zur Laufrichtung des Förderbands 2 nebeneinander und in Laufrichtung des Förderbands 2 versetzt so angeordnet, daß sich überschneidende Reinigungsbereiche der Abstreiflamellen 8 ergeben.

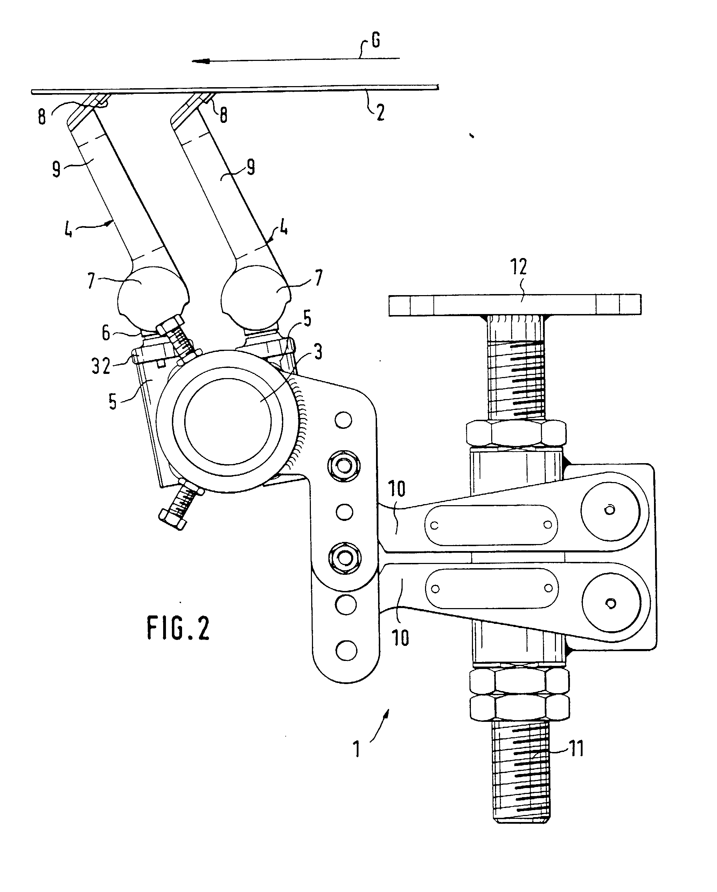

Jedes Abstreifelement 4 wird durch eine Rohrhülse 5 am Systemträger 3 gehalten, in die es mit ihrem zylindrischen Fuß 6 eingesteckt ist. Die Rohrhülse 5 ist fester Bestandteil des quer zur Laufrichtung des Förderbands 2 verlaufenden, als Rohr ausgebildeten Systemträgers 3. Der Systemträger 3, an dem eine Vielzahl von Rohrhülsen 5 angeschweißt sind, erstreckt sich über die ganze Breite des Förderbands 2 und ist über federbelastete Schwingen 10 an beiden Seiten des Förderbands 2 jeweils an einer Spindel 11 angebracht, die jeweils wiederum über eine in der Fig. 1 und 2 gezeigte Platte 12 an dem hier nicht dargestellten Rahmen oder der Tragkonstruktion des Förderbands 2 befestigt ist. Der Systemträger 3 ist vorzugsweise spiegelsymmetrisch ausgebildet. Aus Gründen der Übersicht ist aber in den Figuren 1 bis 4 jeweils nur ein Teil der Abstreifvorrichtung 1 dargestellt.

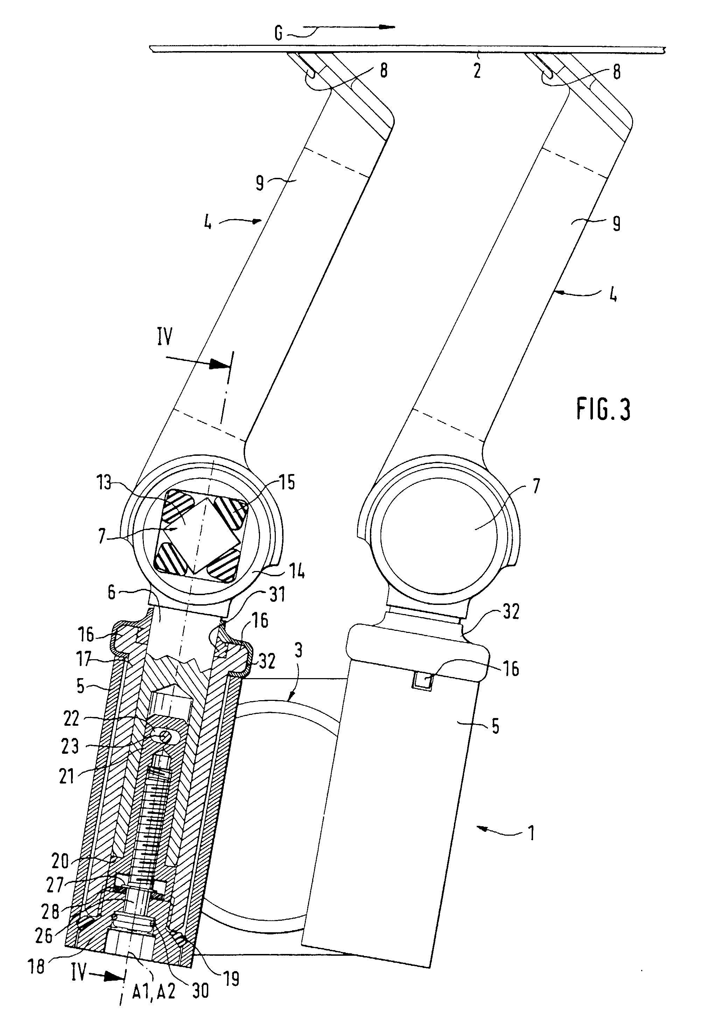

Jede Rohrhülse 5 trägt ein Abstreifelement 4, das, wie oben bereits erwähnt, im wesentlichen aus dem Fuß 6, dem Torsionsfedergelenk 7 und der Lamellenstütze 9 mit der Abstreiflamelle 8 besteht. Während die Lamellenstütze 9 mit einem inneren Vierkant 13 des Torsionsfedergelenks 7 verbunden ist, ist der Fuß 6 mit dem Gehäuse 14 des Torsionsfedergelenks 7 verbunden, siehe Fig. 3. In bekannter Weise sind in dem Torsionsfedergelenk 7 Gummielemente 15 eingebracht, wodurch der Vierkant 13 zentriert und federbelastet gehalten wird. Die Funktion von derartigen Torsionsfedergelenken - auch für die Abstreifelemente - ist dem Fachmann hinreichend bekannt, so daß an dieser Stelle auf eine weitergehende Beschreibung verzichtet werden kann.

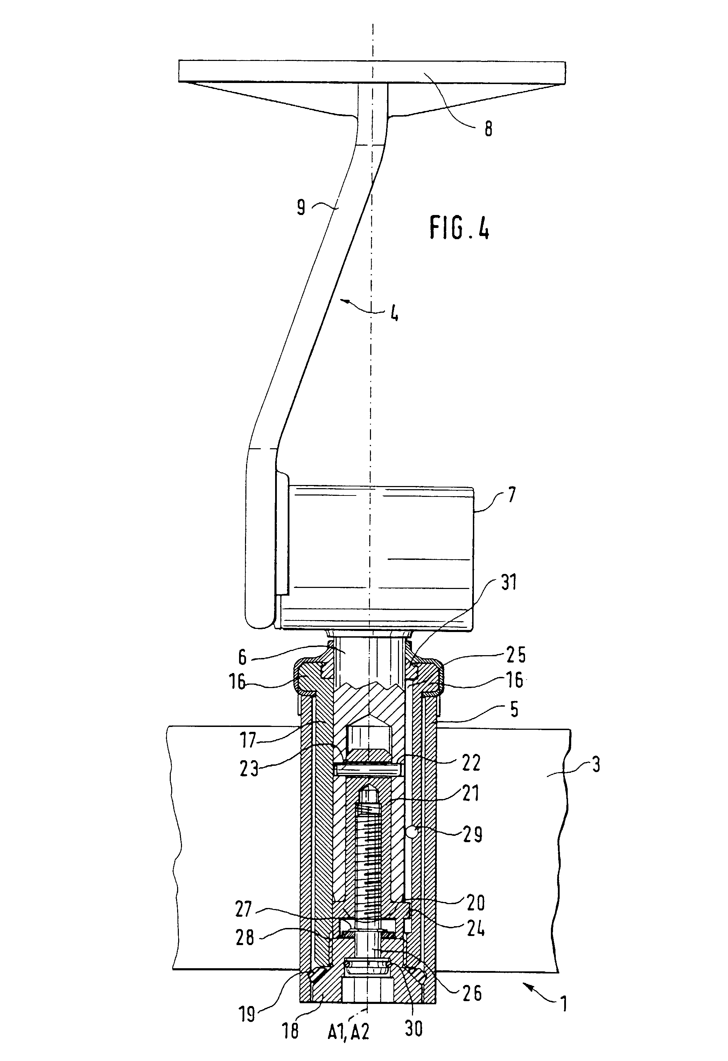

Um eine insbesondere selbsttätige Einstellung der Parallelität der Abstreifkante der Abstreiflamelle 8 zu dem Förderband 2 zu gewährleisten, ist das Abstreifelement 4 in einem Drehlager um die Achse A schwenkbar gelagert. Das Drehlager wird dabei durch die Rohrhülse 5, eine in der Rohrhülse 5 angeordnete Lagerbuchse 17 aus Kunststoff sowie durch den in der Lagerbuchse 17 drehbar gelagerten Fuß 6 des Abstreifelements 4 gebildet. Am oberen Ende der Rohrhülse 5 sind zwei Aussparungen vorhanden, in die jeweils ein Vorsprung 16 der Lagerbuchse 17 eingreift. Die Aussparungen und Vorsprünge 16 sind in Umfangsrichtung so angeordnet, daß nur eine Anordnung der Lagerbuchse 17 in der Rohrhülse 5 möglich ist. Die Lagerbuchse 17 reicht annähernd über die gesamte Länge der Rohrhülse 5 und weist an ihrer Unterseite ein Innengewinde auf, in das eine Sicherungsschraube 18 eingeschraubt ist. Die Sicherungsschraube 18 ist eine Innensechskantschraube mit einem im Querschnitt kreisförmigen Rand, dessen Durchmesser etwas kleiner ist als der Innendurchmesser der Rohrhülse 5. In der Einbaulage drückt die Sicherungsschraube 18 mit einer Konusfläche gegen das untere Ende der Lagerbuchse 17, und dabei wird ein O-Ring 19 durch die Konusfläche nach außen gegen die Wandung der Rohrhülse 5 und in eine dort eingelassene Nut gedrückt. Diese Situation ist in den Figuren 3 und 4 dargestellt. In dieser Lage ist die Sicherungsschraube 18 spielfrei und verdrehgesichert, und zwar durch Reibschluß, in die Rohrhülse 5 eingeschraubt.

Beim Lösen der Sicherungsschraube 18 kehrt der O-Ring in seine ungespannte Ausgangslage zurück. Bei gelöster Sicherungsschraube 18 kann die Lagerbuchse 17 mit der Sicherungsschraube 18 aus der Rohrhülse 5 nach oben herausgezogen werden. Umgekehrt ist so ein leichtes Einstecken der Lagerbuchse 17 in die Rohrhülse 5 möglich. Die dargestellte Nut ist im übrigen für einen sicheren Sitz des Abstreif-elements 4 in der Rohrhülse 5 und somit im Systemträger 3 nicht erforderlich und nur als zusätzliche Sicherung vorhanden. Für die Fixierung genügt die Quetschung des O-Rings 19 gegen die glatte Wand der Rohrhülse 5.

In das Innere der Lagerbuchse 17 ist der Fuß 6 eingesteckt, der als Lagerzapfen ausgebildet und mit dem Gehäuse 14 des Torsionsfedergelenks 7 fest verschweißt ist. Der Fuß 6 liegt in seiner Grundstellung auf dem Bund 20 einer Stellbuchse 21 auf, und ist desweiteren mit dieser Stellbuchse 21 mit Hilfe einer Stiftverbindung in Axialrichtung spielfrei und in Schwenkrichtung schwenkbar verbunden. Dazu ist in der Stellbuchse 21 ein Langloch 22 eingearbeitet, durch das ein Stift 23 hindurchgeht, der in einer entsprechenden Querbohrung in dem Fuß 6 gehalten ist. Dadurch kann die aus dem Fuß 6, dem Torsionsfedergelenk 7, der Lamellenstütze 9 und der Abstreiflamelle 8 gebildete Einheit um ausreichende Winkelbeträge hin- und herschwenken, wobei die Drehbewegung der Stellbuchse 21 dadurch vermieden wird, daß eine an ihrem Bund 20 angeformte Nase 24 (Fig. 4) in einer Längsnut 25 der Lagerbuchse 17 geführt ist.

Die Stellbuchse 21 ist Bestandteil einer Einrichtung zur Höhenverstellung des Fußes 6 gegenüber der Lagerbuchse 17 und somit der Abstreiflamelle 8 entlang der Achse A. Die Höhenverstelleinrichtung wird nun nachfolgend genauer beschrieben. Innerhalb der Sicherungsschraube 18 ist eine Stellschraube 26 drehbar, jedoch in Axialrichtung festgelegt gehalten, wozu zum einen der Schraubenkopf und zum anderen ein Wellensicherungsring 27 mit untergelegter Scheibe 28 dient, der in einer in die Stellschraube 26 eingestochenen Nut eingesetzt ist. Die Stellschraube 26, die als Innensechskantschraube ausgebildet ist, kann ohne Behinderung von unten her hin- und hergedreht werden. Dabei ist sie durch den Wellensicherungsring 27 bzw. den Kopf in axialer Richtung festgelegt, so daß eine Drehbewegung der Stellschraube 26 eine Axialbewegung der Stellbuchse 21 zur Folge hat. Letztere kann sich, wie bereits erwähnt, deshalb nicht mitdrehen, weil die Nase 24 eine Drehbewegung innerhalb der Längsnut 25 verhindert. Der Stellweg wird durch einen Stift 29 begrenzt, der in die Lagerbuchse 17 eingetrieben ist und den Aufwärtsweg innerhalb der Längsnut 25 versperrt. Die Stellschraube 26 ist wiederum durch einen O-Ring 30 durch Reibschluß gegen ein selbsttätiges Verstellen gesichert.

Soll ein Abstreifelement 4 aus einer Rohrhülse 5 ausgebaut werden, wird zunächst die Sicherungsschraube 18 in der Lagerbuchse 17 gelöst. Nun kann das Abstreifelement 4 oben aus der Rohrhülse 5 herausgezogen werden. Die Montage erfolgt in umgekehrter Weise.

Es versteht sich von selbst, daß bei der Stiftverbindung zwischen dem Fuß 6 und der Stellbuchse 21 auch eine Umkehrung der Ausbildung stattfinden kann, daß also in dem Fuß 6 ein Langloch eingeformt sein kann, während eine Querbohrung in der Stellbuchse 21 den Stift 23 aufnimmt. Es handelt sich dabei um eine Prinzipumkehr, die dem Fachmann geläufig ist.

Am oberen Ende der Lagerbuchse 17 ist eine Tasche angebracht, in die eine Manschette 31 eingesetzt ist. Zudem ist die Manschette 31 und der obere Teil der Lagerbuchse 17 von einer Dichtkappe 32 umschlossen. Im übrigen sind alle Teile mit wasserbeständigem Fett eingestrichen, so daß eine geschmeidige Bewegung und ein optimaler Korrosionsschutz gegeben ist. Auf die Sicherungsschraube 18 kann eine Schutzkappe (nicht gezeigt) aufgesetzt werden, die dann zu Verstell- und Lösezwecken abgenommen wird. Doch auch ohne eine solche Kappe liegen beide Schrauben 18 und 26 gut geschützt im Inneren der Rohrhülse 5.

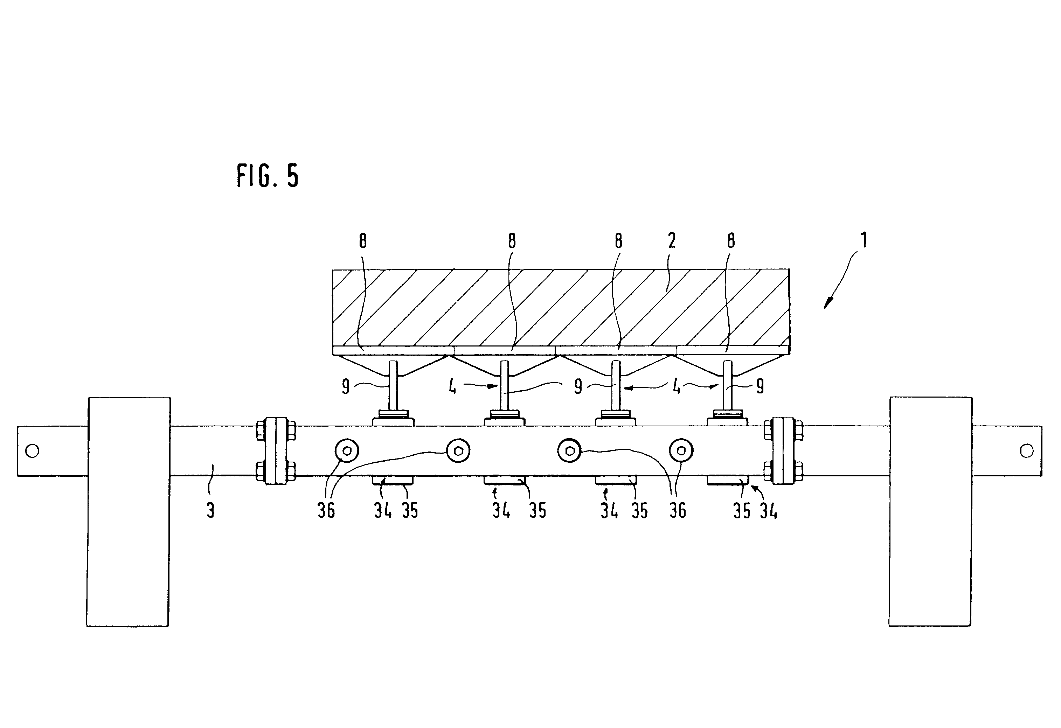

In den Figuren 5 bis 9 ist eine zweite, dritte und vierte Ausführungsform des Abstreifelements 4 dargestellt, wobei die gleichwirkenden Teile dieselben Bezugszeichen wie die erste Ausführungsform haben. Der zweiten, dritten und vierten Ausführmgsform ist zudem gemeinsam, daß der Fuß 6 des Abstreifelements 4 in eine Halterung 33 eingesteckt ist, die mit dem Systemträger 3 verbunden ist. Der in die Halterung 33 eingesteckte Fuß 6 verläuft dabei parallel zur Ebene des Förderbands 2. Das Gehäuse 14 des Torsionsiedergelenks 7 ist unmittelbar am äußeren Ende des Fußes 6 befestigt. Zwischen dem Torsionsfedergelenk 7 und der Lamellenstütze 9 ist ein Drehlager 34 vorgesehen, in dem die Lamellenstütze 9 drehbar gelagert ist. Der Vierkant 13 des Torsionsfedergelenks 7 ist dabei an einer Rohrhülse 35 des Drehlagers 34 angeschweißt.

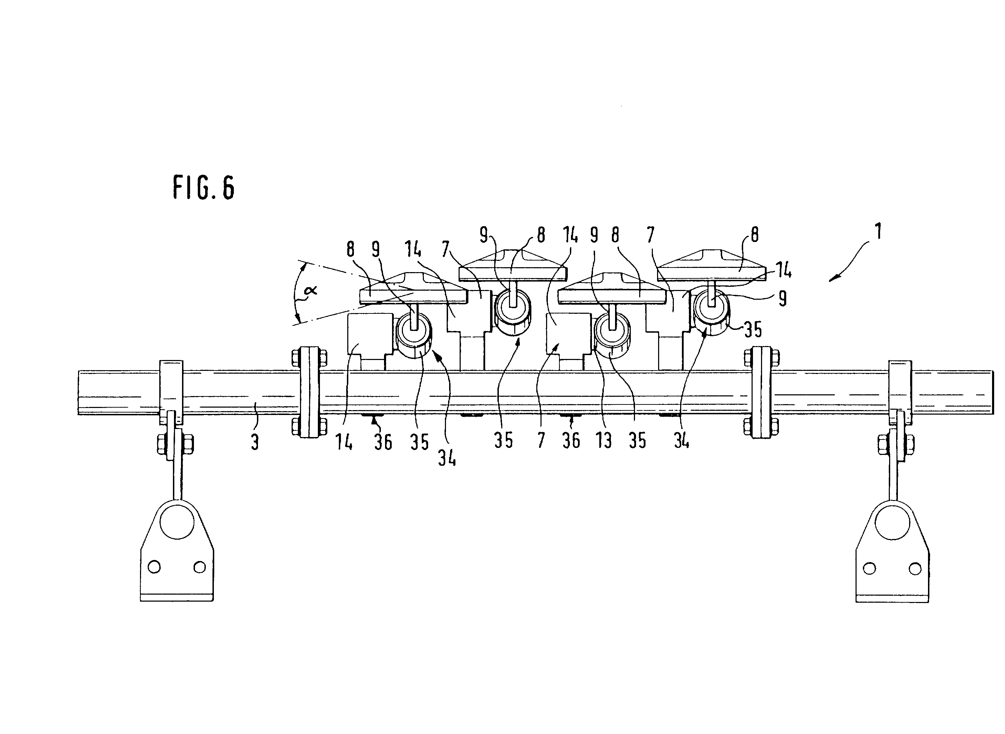

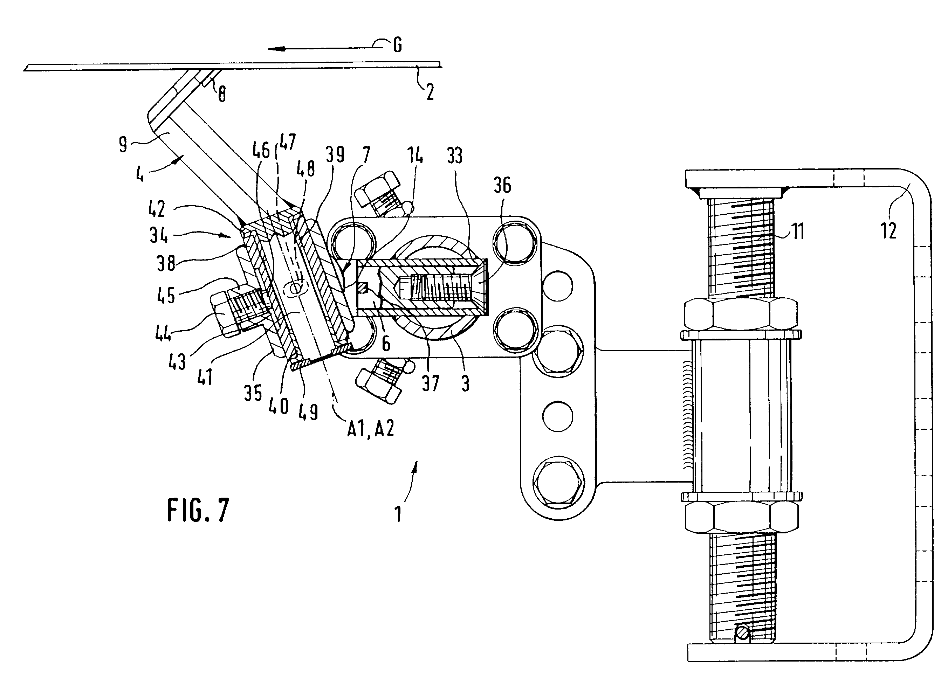

Das Drehlager 34 ist seitlich versetzt zur Mittelachse des Fußes 6 sowie der Halterung 33 am Torsionsfedergelenk 7 angeordnet und an dem Vierkant 13 des Torsionsfedergelenks 7 befestigt, wie insbesondere den Figuren 5 und 6 in Verbindung mit Fig. 7 zu entnehmen ist.

Der Fuß 6 ist mit einer sich in Axialrichtung der Halterung 33 erstreckenden Schraube 36 in dieser so befestigt, daß die Schraube 36 mit ihrem Gewindeteil in einen in dem Fuß 6 eingearbeiteten Gewindegang eingreift und mit ihrem Schraubenkopf auf einer Kreisringfläche der Halterung 33 aufliegt. Um die Drehbewegung des Fußes 6 in der Halterung 33 zu verhindern, weist der Fuß 6 einen quer zur Achsrichtung des Fußes 6 verlaufenden, federbelasteten, radial verschiebbaren Stift 37 in einer Ausnehmung auf, der in eine korrespondierende Querbohrung in der Halterung 33 einrastet, wenn der Fuß 6 bestimmungsgemäß bis zum Anschlag in die Halterung 33 eingesteckt ist. Dieser Stift 37 dient mit der zugeordneten Querbohrung auch als Positionierungshilfe für das Einsetzen des Fußes 6 in die Halterung 33.

In den in den Figuren 5 bis 9 dargestellten Ausführungsformen ist sowohl das Torsionsfedergelenk 7 als auch das Drehlager 34 und der Fuß 6 mit der Halterung 33 gekapselt ausgebildet, um das Eindringen von verschleißfördernden Partikeln, beispielsweise Kohlenstaub oder dergleichen, zu verhindern.

Bei der Demontage des Abstreifelements 4 von dem Systemträger 3 wird lediglich die Schraube 36 gelöst und der Stift 37 nach innen in die Ausnehmung von außen gedrückt, woraufhin das Abstreifelement 4 mit dem Fuß 6 als Ganzes aus der Halterung 33 herausgezogen werden kann. Anschließend kann das Abstreifelement 4 in umgekehrter Weise mit dem Fuß 6 in die Halterung 33 eingesetzt und mit der Schraube 36 wieder befestigt werden.

Es ist aber auch möglich, die Lamellenstütze 9 aus dem Drehlager 34 herauszuziehen, wie aus der Beschreibung der einzelnen Ausführungsformen noch deutlich wird.

Das Drehlager 34 gemäß den Figuren 5 bis 7 der zweiten Ausführungsform des Abstreifelements 4 besteht aus der Rohrhülse 35, einer Zwischenhülse 38 und einer oberen und unteren Lagerbuchse 39 und 40. Die obere und untere Lagerbuchse 39 und 40 weisen jeweils einen Flanschrand auf, der auf der Stirnseite der Zwischenhülse 38 aufliegt. Dadurch ist jede Lagerbuchse 39, 40 in einer Axialrichtung fixiert. In den Lagerbuchsen 39 und 40 ist die Lamellenstütze 9 mit ihrem der Abstreiflamelle 8 gegenüberliegenden Endbereich angeordnet, der als Lagerzapfen 41 mit einem Anschlag 42 ausgebildet ist. Der Anschlag 42 liegt auf der oberen Lagerbuchse 39 auf. Auf diese Weise ist die Lamellenstütze 9 auch axial gelagert.

Die Rohrhülse 35 und die Zwischenhülse 38 bestehen aus Metall und die Lagerbuchsen 39 und 40 aus Kunsstoff. Die Zwischenhülse 38 ist an ihrer Außenfläche mit einer in Achsrichtung verlaufenden Nut 43 versehen, in die eine in die Rohrhülse 35 eingeschraubte Schraube 44 eingreift und die, wie der Fig. 7 zu entnehmen ist, eine begrenzte Länge hat.

Ein sicherer Sitz der Schraube 44 ist dadurch gewährleistet, daß die Rohrhülse 35 einen Stutzen 45 mit einem Gewinde aufweist, in den die Schraube 44 eingeschraubt ist.

Um die um die Achse A verschwenkbare Lamellenstütze 9 mit der Abstreiflamelle 8 axial entlang der Achse A in der Höhe zu verschieben, ist es notwendig, die Schraube 44 so weit zu lockern, daß sich ihr Ende 46 vom Boden der Nut 43 löst, so daß anschließend die Zwischenhülse 38, die Lagerbuchsen 39, 40 sowie der Lagerzapfen 41 entlang der Achse A maximal entsprechend der Erstreckung der Nut 43 verschoben werden können. Anschließend wird die Schraube 44 wieder angezogen, wodurch die Zwischenhülse 38 wieder relativ zur Rohrhülse 35 festgelegt ist.

Zur Demontage der gesamten aus der Lamellenstütze 9, der Abstreiflamelle 8, des Lagerzapfens 41, der Lagerbuchsen 39, 40 und der Zwischenhülse 38 bestehenden Einheit ist es erforderlich, die Schraube 44 so weit aus dem Stutzen 45 herauszudrehen, daß das Ende 46 der Schraube 44 nicht mehr in die Nut 43 eingreift und die Zwischenhülse 38 mit den in ihr angeordneten Teilen aus der Rohrhülse 35 herausgezogen werden kann.

Der Figur 7 ist zu entnehmen, daß der Lagerzapfen 41 ein sich in seine Radialrichtung erstreckendes Langloch 47 aufweist, in das ein mit der Zwischenhülse 38 verbundener Stift 48 eingreift. Dieser hält die Zwischenhülse 38 derart an dem Lagerzapfen 41, daß sie relativ zueinander drehbar und in Axialrichtung nur gemeinsam bewegbar sind, wenn die Schraube 44 in der oben beschriebenen Weise gelöst ist. Dadurch wird zudem der Verdrehwinkel der Lamellenstütze 9 im Drehlager 34 auf einen Winkel α von 25° begrenzt.

Die Zwischenhülse 38 ist über einen Stopfen 49 an ihrer unteren Stirnseite verschlossen und gekapselt. Der Durchmesser des Stopfens 49 entspricht dem Außendurchmesser der Zwischenhülse 38 oder ist etwas kleiner als dieser. Auf diese Weise kann der Stopfen 49 an seinem Platz verbleibend mit der Zwischenhülse 38 und mit den in ihr angeordneten Teilen herausgezogen werden.

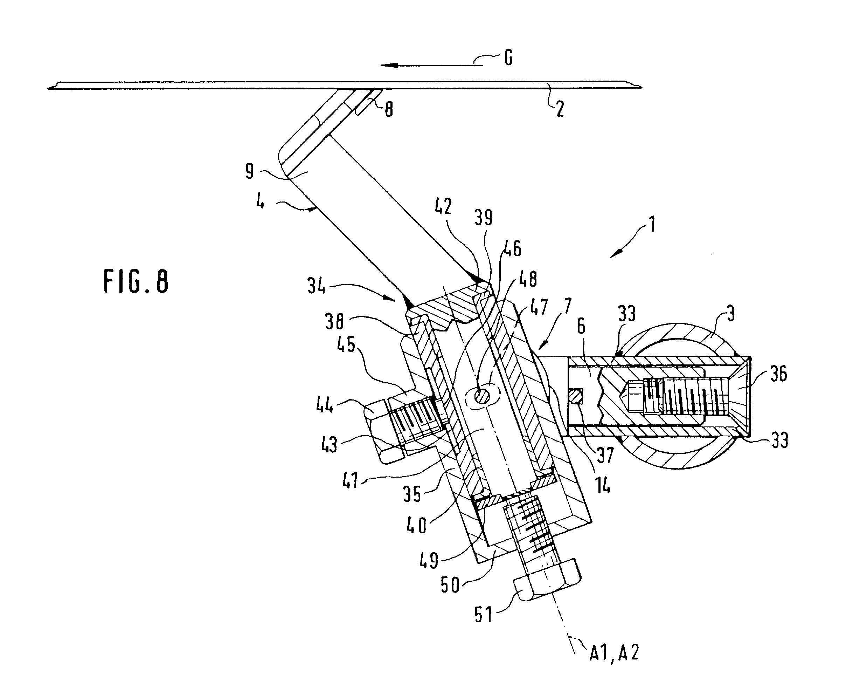

In Fig. 8 ist eine dritte Ausführungsform des Abstreifelements 4 dargestellt. Diese entspricht im wesentlichen der zweiten Ausführungsform gemäß den Figuren 5 bis 7. Lediglich die Rohrhülse 35 ist nach unten verlängert ausgebildet und mit einer Stirnwandung 50 versehen. In der Stirnwandung 50 ist in bezug auf die Achse A koaxial eine Gewindebohrung eingearbeitet, in die eine Stellschraube 51 eingreift. Das Ende der Stellschraube 51 liegt über den Stopfen 49 an der Unterseite des Lagerzapfens 41 an. Auf diese Weise muß nicht - wie bei der Ausführung nach Fig. 7 - bei einer Höhenverstellung der Lamellenstütze 9 der Lagerzapfen 41 beim Lösen der Schraube 44 gehalten werden, da nämlich normalerweise durch das Eigengewicht des auf der Abstreiflamelle anliegenden Förderbands 2 die Lamellenstütze 9 und somit der Lagerzapfen 41 nach unten gedrückt wird. Vielmehr werden nun der Lagerzapfen 41, die Lagerbuchsen 39, 40, die Zwischenhülse 38 sowie der Stopfen 49 durch die Stellschraube 51 gehalten. Die ganze Einheit kann bei gelöster Schraube 44 durch Drehen der Stellschraube 51 kontinuierlich nach oben bzw. unten bewegt und dann wieder durch die Schraube 44 fixiert werden.

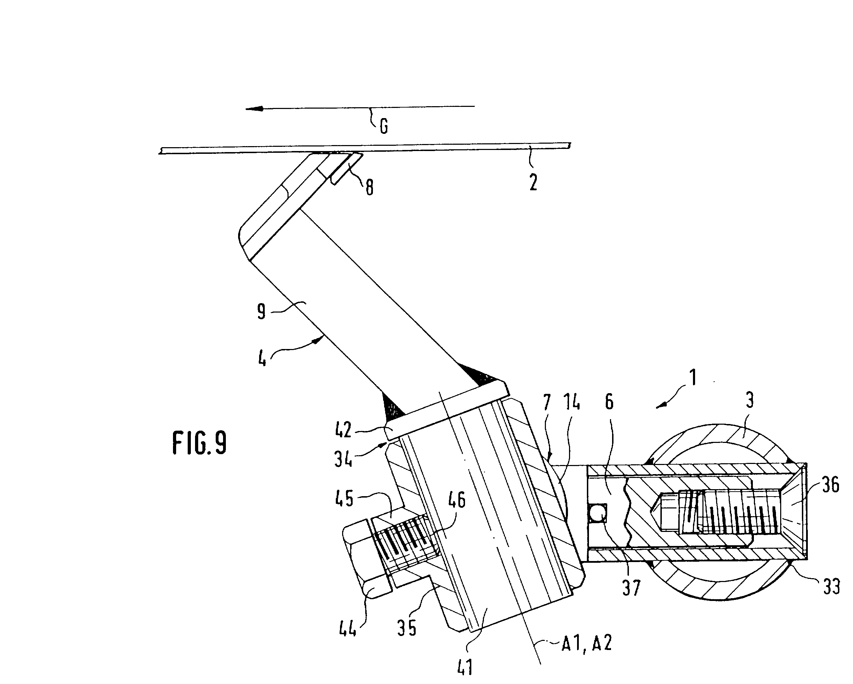

Die in Figur 9 dargestellte vierte Ausführungsform des Abstreifelements 4 unterscheidet sich von der zweiten Ausführungsform vor allem dadurch, daß die Lamellenstütze 9 mit ihrem Lagerzapfen 41 direkt in der Rohrhülse 35 um die Achse A drehbar gelagert ist und die Lamellenstütze 9 in vorbestimmten Schwenkpositionen durch Eindrehen und Festziehen der Schraube 44 und dadurch bewirktes Klemmen des Lagerzapfens 41 in der Rohrhülse 35 fixierbar ist. Die Höhenverstellung der Abstreiflamelle 8 erfolgt dadurch, daß die Schraube 44 gelöst und der Lagerzapfen 41 entlang der Achse A verschoben wird. Anschließend wird die Schraube 44 wieder festgezogen und der Lagerzapfen 41 in der Rohrhülse 35 durch die Schraube 44 geklemmt.

Der kraftschlüssige Eingriff des Endes 46 der Schraube 44 am Umfang des Lagerzapfens 41 kann - auch bei den anderen Ausführungsformen - noch durch eine Riffelung oder dergleichen am Umfang des Lagerzapfens 41 wirkungsvoll verstärkt werden.

## Patentansprüche

1. Abstreifvorrichtung (1) für das Abwurfende eines Förderbands (2), mit einem Systemträger (3) und mit daran angeordneten Abstreifelementen (4), wobei jedes Abstreifelement eine Abstreiflamelle (8), die in betriebsbereiter Lage schälend an dem Föderband (2) anliegt, eine Lamellenstütze (9), an deren oberem Ende die Abstreiflamelle (8) befestigt ist, ggfs. ein Torsionsfedergelenk (7), an dem die Lamellenstütze (9) um eine horizontale Achse schwenkbar und federbelastet geführt ist, einen Fuß (6), an dem das Tosionsfedergelenk (7) gehalten und der an dem Systemträger 83) angebracht ist, eine Stelleinrichtung (21, 26; 44, 51) zur Höheneinstellung der Abstreiflamelle (8) entlang einer senkrecht zur Achse des Tosionsfedergelenkes verlaufenden Achse (Al), sowie ein Drehlager (34) zum Verschwenken der Abstreiflamelle (8) um diese Achse (A1) zur Einstellung der Parallelität der Abstreifkante der Abstreiflamelle (8) zu dem Föderband (2) aufweist, wobei diese Achse (A1) mit dem auf die Abstreiflamelle (8) zulaufenden Abschnitt des Förderbandes einen Winkel bildet, der kleiner als 90° ist,
**dadurch gekennzeichnet,**
daß für jedes Abstreifelement (4) am Systemträger (3) eine Rohrhülse (5, 35) befestigt ist, in die der eine Lagerbuchse (17; 38; 41) aufweisende Fuß (6) einzustecken und drehfest mit der Rohrhülse zu verbinden ist, wobei in der Lagerbuchse das Drehlager (34) für das betreffende Abstreifelement (4) angeordnet ist.

2. Vorrichtung nach Anspruch 1, dadurch gekennzeichnet, daß die Höhenverstelleinrichtung (21, 26) in der Lagerbuchse (17) angeordnet ist.

3. Vorrichtung nach Anspruch 1 oder 2, dadurch gekennzeichnet, daß in die Lagerbuchse (17) eine Sicherungsschraube (18) zur axialen Längsfixierung der Lagerbuchse (17) in der Rohrhülse (5) einschraubbar ist.

4. Vorrichtung nach Anspruch 3, dadurch gekennzeichnet, daß der kopf der Sicherungsschraube (18) einen Durchmesser hat, der etwas kleiner ist als der Innendurchmesser der Rohrhülse (5), und daß zwischen der Sicherungsschraube (18) und der Lagerbuchse (17) ein verquetschbarer und bei festgezogener Sicherungsschraube (18) gegen die Innenwand der Rohrhülse (5) gedrückter 0-Ring (19) angeordnet ist.

5. Vorrichtung nach Anspruch 4, dadurch gekennzeichnet, daß in die Innenwand der Rohrhülse (5) eine Nut eingelassen ist, in die der 0-Ring (19) bei festgezogener Sicherungsschraube (18) eindringt.

6. Vorrichtung nach einem der Ansprüche 1 bis 5, dadurch gekennzeichnet, daß die Höhenstelleinrichtung eine durch die Sicherungsschraube (18) zugängliche Stellschraube (26) aufweist, die drehbar, jedoch in Axialrichtung festgelegt an der Sicherungsschraube (18) gehalten ist und die in eine Stellbuchse (21) eingreift, welche axial verschiebbar, jedoch drehfest in der Lagerbuchse (17) angeordnet ist.

7. Vorrichtung nach einem der Ansprüche 1 bis 6, dadurch gekennzeichnet, daß die Stellbuchse (21) ein Langloch (22) und der Lagerzapfen bzw. Fuß (6) in gleicher Höhenlage eine Querbohrung oder umgekehrt enthalten und daß durch das Langloch (22) und die Querbohrung ein Stift (23) hindurchgeht, so daß der Lagerzapfen bzw. Fuß (6) gegenüber der Stellbuchse (21) um einen begrenten Betrag verschwenkbar, jedoch in Axialrichtung im wesentlichen spielfrei mit ihr verbunden ist.

8. Vorrichtung nach einem der Ansprüche 1 bis 7, dadurch gekennzeichnet, daß in der Wand der Rohrhülse (35) eine radial von außen nach innnen einschraubbare Schraube (44) vorgesehen ist, deren inneres Ende (46) zur Positionnierung des Fußes relativ zur Rorhhülse (35) dient.

9. Vorrichtung nach Anspruch 8, dadurch gekennzeichnet, daß die Schraube (44) mit ihrem inneren Ende (46) in eine in Axialrichtung außen an einer Zwischenhülse (38) verlaufende Nut (43) eingreift und zum Feststellen der Zwischenhülse (38) in der Rohrhülse (35) gegen den Nutgrund drückt.

10. Vorrichtung nach einem der Ansprüche 1 bis 9, dadurch gekenzeichnet, daß die Zwischenhülse (38), die Lagerbuchse (39, 40) und der Lagerzapfen (41) durch einen Stopfen (49) am unteren Ende der Zwischenhülse (38) gekapselt sind, wobei der Durchmesser des Stopfens (49) maximal dem Außendurchmesser der Zwischenhülse (38) entspricht.

11. Vorrichtung nach einem der Ansprüche 1 bis 10, dadurch gekennzeichnet, daß die Höhenstelleinrichtung durch eine in eine Gewindebohrung an der Rohrhülse (35) eingreifende Stellschraube (51) gebildet ist, durch die zumindest der Lagerzapfen (41) längs der Achse (A1) bewegbar ist.

## Claims

1. Stripper device (1) for the delivery end of a conveyor belt (2) with a system carrier (3) and with stripper elements arranged on it, each stripper element (8), having a stripper plate (8) engaging the conveyor belt (2) in a peeling manner in its operative position, a plate support (9) to the upper end of which is secured the stripper plate (8), possibly a torsion spring pivot (7) on which the plate support (9) is pivoted about a horizontal axis and guided in a spring-loaded manner, a foot (6) on which the torsion spring pivot (7) is held and which is mounted on the system carrier (3), an adjusting device (21, 26; 44, 51) for adjusting the height of the stripper plate (8) along an axis (A1) extending perpendicular to the axis of the torsion spring pivot, as well as a rotary bearing (34) for pivoting the stripper plate (8) about this axis (Al) for adjusting the degree with which the stripper edge of the stripper plate (8) is parallel to the conveyor belt (2), this axis (Al) making an angle of less than 90° with the portion of the conveyor belt coming towards the stripper plate (8),
characterised in that,
for each stripper element (4) there is secured on the system carrier (3) a tubular sleeve (5, 35) in which the foot (6) having a bearing bush (17; 38; 41) can be plugged and can be connected in a non-rotatable manner to the tubular sleeve, the rotary bearing (34) for the associated stripper element (4) being arranged in the bearing bush.

2. Device according to Claim 1, characterised in that the height adjusting device (21, 26) is arranged in the bearing bush (17).

3. Device according to Claim 1 or 2, characterised in that a securing screw (18) is designed to be screwed into the bearing bush (17) for axially longitudinally locating the bearing bush (17) in the tubular sleeve (5).

4. Device according to Claim 3, characterised in that the head of the securing screw (18) has a diameter which is somewhat smaller that the inside diameter of the tubular sleeve (5), and that between the securing screw (18) and the bearing bush (17) there is arranged a squashable O-ring (19) which, with the securing screw (18) tightened up, is pressed against the inner wall of the tubular sleeve (5).

5. Device according to Claim 4, characterised in that a groove is formed in the inside wall of the tubular sleeve (5), into which the O-ring (19) penetrates when the securing screw (18) is tightened.

6. Device according to one of Claims 1 to 5, characterised in that the height adjusting device comprises an adjusting screw (26) accessible through the securing screw (18) and held rotatably but fixed in an axial direction on the securing screw (18) and engaging in a locating bush (21) which is arranged in the bearing bush (17) to be axially displaceable but prevented from rotation.

7. Device according to one of Claims 1 to 6, characterised in that the locating bush (21) contains an elongated hole (22) and the bearing pin or foot (6) has at the same height position a transverse bore or vice versa, and that a pin (23) extends through the elongated hole (22) and the transverse bore so that the bearing pin or foot (6) can pivot through a limited amount with respect to the locating bush (21) but is connected to it in a axial direction substantially without any play.

8. Device according to one of Claims 1 to 7, characterised in that a screw (44) which can be screwed in radially from outside is provided in the wall of the tubular sleeve (35), its inner end (46) serving to position the foot relative to the tubular sleeve (35).

9. Device according to Claim 8, characterised in that the screw (44) has its inner end (46) engaging in a groove (43) extending in an axial direction outwards on the outside of an intermediate sleeve (38) and for securing the intermediate sleeve (38) in the tubular sleeve (35) it presses it against the base of the groove.

10. Device according to one of Claims 1 to 9, characterised in that the intermediate sleeve (38), the bearing bushes (39, 40) and the bearing pin (41) are sealed by a plug (49) at the lower end of the intermediate sleeve (38), the diameter of the plug (49) corresponding at most to the outside diameter of the intermediate sleeve (38).

11. Device according to one of Claims 1 to 10, characterised in that the height adjusting device is formed by a set screw (51) engaging in a threaded bore in the tubular sleeve (35) and moveable along the axis (Al) by the at least one bearing pin (41).

## Revendications

1. Dispositif de raclage (1) pour l'extrémité de déchargement d'une bande transporteuse (2), comprenant un support de système (3) et des éléments racleurs (4) agencés sur ce support, chaque élément racleur possédant une lamelle racleuse (8) qui, en ordre de marche, est appuyée en position de rabotage contre la bande transporteuse (2), un support de lamelle (9) à l'extrémité supérieure duquel la lamelle racleuse (8) est fixée, éventuellement une articulation à ressort de torsion (7) sur laquelle le support de lamelle (9) est guidé de façon à pouvoir pivoter autour d'un axe horizontal et avec sollicitation par ressort, un pied (6) au niveau duquel l'articulation à ressort de torsion (7) est tenue et qui est monté sur le support de système (3), un dispositif de réglage (21, 26 ; 44, 51) destiné au réglage en hauteur de la lamelle racleuse (8) le long d'un axe (A1) s'étendant perpendiculairement à l'axe de l'articulation à ressort de torsion ainsi qu'un palier (34) servant à faire pivoter la lamelle racleuse (8) autour de cet axe (Al) pour le réglage du parallélisme entre l'arête racleuse de la lamelle racleuse (8) et la bande transporteuse (2), cet axe (A1) formant un angle qui est inférieur à 90° avec le segment de la bande transporteuse qui arrive sur la lamelle racleuse (8),
caractérisé
en ce que, pour chaque élément racleur (4), est prévue une douille tubulaire (5, 35) fixée au support de système (3), dans laquelle le pied (6) qui présente un coussinet (17 ; 38 ; 41) doit être emboîté et relié solidairement en rotation à la douille tubulaire, cependant que, dans le coussinet, est agencé le palier (34) recevant l'élément racleur (4) correspondant.

2. Dispositif selon la revendication 1, caractérisé en ce que le dispositif de réglage en hauteur (21, 26) est agencé dans le coussinet (17).

3. Dispositif selon la revendication 1 ou 2, caractérisé en ce que, dans le coussinet (17), peut être vissée une vis de retenue (18) servant à l'immobilisation longitudinale axiale du coussinet (17) dans la douille tubulaire (5).

4. Dispositif selon la revendication 3, caractérisé en ce que la tête de la vis de retenue (18) a un diamètre qui est légèrement plus petit que le diamètre intérieur de la douille tubulaire (5) et en ce qu'entre la vis de retenue (18) et le coussinet (17), est disposée une bague torique (19) qui peut être écrasée et qui est comprimée contre la paroi intérieure de la douille tubulaire (5) lorsque la vis de retenue (18) est serrée.

5. Dispositif selon la revendication 4, caractérisé en ce que, dans la paroi intérieure de la douille tubulaire (5) est creusée une gorge dans laquelle la bague torique (19) s'engage lorsque la vis de retenue (18) est serrée.

6. Dispositif selon l'une quelconque des revendications 1 à 5, caractérisé en ce que le dispositif de réglage en hauteur présente une vis de réglage (26) accessible à travers la vis de retenue (18) qui est tenue sur la vis de retenue (18) mobile en rotation mais bloquée dans la direction axiale et qui est engagée dans une douille de réglage (21) qui est agencée mobile en translation axiale mais bloquée en rotation dans le coussinet (17).

7. Dispositif selon l'une quelconque des revendications 1 à 6, caractérisé en ce que la douille de réglage (21) présente un trou allongé (22) et le tourillon ou le pied (6) présente à la même position en hauteur un perçage transversale, ou inversement, et en ce qu'une goupille (23) traverse le trou allongé (22) et le perçage transversal, de sorte que le tourillon ou le pied (6) est monté mobile en pivotement d'une amplitude limitée par rapport à la douille de réglage (21) mais relié sensiblement sans jeu à cette douille dans la direction axiale.

8. Dispositif selon l'une quelconque des revendications 1 à 7, caractérisé en ce que, dans la paroi de la douille tubulaire (35) est prévue une vis (44) qu'on peut visser radialement de l'extérieur vers l'intérieur et dont l'extrémité intérieure (46) sert au positionnement du pied par rapport à la douille tubulaire (35).

9. Dispositif selon la revendication 8, caractérisé en ce que la vis (44) est engagée par son extrémité intérieure (46) dans une rainure (43) s'étendant extérieurement dans la direction axiale sur une douille intermédiaire (38), et exerce une pression contre le fond de la rainure pour immobiliser la douille intermédiaire (38) dans la douille tubulaire (35).

10. Dispositif selon l'une quelconque des revendications 1 à 9, caractérisé en ce que la douille intermédiaire (38), le coussinet (39, 40) et le tourillon (41) sont enfermés hermétiquement par un bouchon (49) à l'extrémité inférieure de la douille intermédiaire (38), le diamètre du bouchon (49) correspondant au maximum au diamètre extérieur de la douille intermédiaire (38).

11. Dispositif selon l'une quelconque des revendications 1 à 10, caractérisé en ce que la dispositif de réglage en hauteur est formé par une vis de réglage (51) qui est engagée dans un perçage fileté prévu dans la douille tubulaire (35), et au moyen de laquelle au moins le tourillon (41) peut être déplacé le long de l'axe (A1).
